# EUROPEAN PATENT APPLICATION

(11) **EP 1 174 231 A1**
(43) Date of publication of application: **23.01.2002**
(21) Application number: 01202705.8
(22) Date of filing: 16.07.2001
(51) Int. Cl.: B27K 3/50, B27K 3/15

(54) **Wood preserver**

(30) Priority: 17.07.2000 NL 1015728
(71) Applicant: DSM N.V., 6411 TE Heerlen (NL)
(72) Inventor: Dekker, Gerrit Hendrik, 8271 KA Ijsselmuiden (NL)
(74) Representative: van Tol-Koutstaal, Charlotte Adeliene

(57) **Abstract**

The invention relates to the use of an anhydride functional resin with an anhydride functionality between 50 and 200 meq/g resin as a wood preserver.

The resin can be the reaction product of an unsaturated anhydride with a fatty acid or an oil. The wood preserver is preferably the reaction product of maleic anhydride and soybean fatty acid.

## Description

The invention relates to a wood preserver.

As appears from the article "Houtverduurzamers staan perplex van CTB-besluit" (Wood preservation industry perplexed by CTB decision; Actueel, 17; 9 September 1999; pp. 12-15), the admission of chemical preservatives as wood preservers will be severely restricted.

In the past wood was preserved by the use of heavy metals, for example copper or chromium. These metals were applied as solutions, most of the time aqueous solutions. The use of copper in the preservation process caused the wood to take a green colour. The heavy metals preserved the wood for fungis, thereby preventing the rotting process. However the use of heavy metals has become more and more suspect, from an environmental and health point of view. Therefore some govemments already prohibited the use of these metals in the past and the expectation is that others will do so in the (near) future.

The object of the invention is to provide a product that can be applied as a wood preserver and that causes no environmental damage.

The invention is characterized in that as wood preserver an anhydride functional resin with an anhydride functionality between 50 and 200 meq/g resin is used.

As the hydroxyl groups in the wood react relatively quickly with the anhydride groups of the resin, the wood preserver is rapidly fixed within the wood so that moisture absorption and thus wood rot is prevented.

Further it has surprisingly been found that the invention also results in improved dimensional stability. A further advantage of the present invention is the increase in bending strength and stiffness compared to untreated wood.

Use of the preserver according to the invention ensures that the environmental protection requirements are met during wood preservation, during use and also during the waste disposal phase. When wood, for example for a garden application, is being preserved, no preserver seeps from the wood and no harmful substances are released when, after many years, the wood is ultimately burned or dumped, which currently is still always the case.

According to a preferred embodiment of the invention the anhydride functionality lies between 100 and 150 meq/g resin.

Preferably the resin is an oxidatively drying resin so that good network formation takes place and as a result a closed film is obtained. The term oxidatively drying resin is well-known in the art. Resins can be classified according to their film-forming ability, therefore they can be classified according to their iodine value as either non-drying (Iodine Value (IV) less than 100), semi-drying (IV between 100-130) and drying (IV over 130). The preferred resin is either semi-drying or drying. It is more preferred to use a resin that is drying with an IV over 150.

According to a further preferred embodiment of the invention the resin is the product of a Diels-Alder reaction between an unsaturated anhydride - with an oil or a fatty acid. The fatty acid can also be used as its ester with a C1-C4 alcohol. When the fatty acid is used as its ester it is preferred to use the methylester. A preferred anhydride for such a Diels-Alder reaction is maleic anhydride. The reactions and conditions for Diels-Alder reactions are well-known to the man skilled in the art.

Examples of suitable oils are linseed oil, soybean oil, safflower oil, oiticica oil, caraway oil, rapeseed oil, castor oil, dehydrated castor oil, cotton seed oil, wood oil, vernonia oil, coconut oil, sunflower oil, groundnut oil, olive oil, soybean oil, com oil, non-cyclic terpene oils and fish oil, for example herring or sardine oil. Vegetable oils are described in Surface Coatings, Vol. I: 20-38 (1983), and what is disclosed there is included herein by reference. Preferably use is made of soybean oil and/or sunflower oil.

The fatty acids for use in the Diels-Alder reaction are unsaturated. Examples of suitable fatty acids are linseed oil fatty acid, tall oil fatty acid, soybean oil fatty acid, cotton seed oil fatty acid, safflower oil fatty acid, oiticica oil fatty acid, caraway oil fatty acid, rapeseed oil fatty acid, coconut oil fatty acid, dehydrated castor oil fatty acid, wood oil fatty acid, vemonia oil fatty acid, sunflower oil fatty acid, fish oil fatty acid, lauroleic acid, myristoleic acid, palmitoleic acid, oleic acid, linoleic acid, linolenic acid, ricinoleic acid, gadoleic acid and erucic acid, as well as unsaturated fatty acids (C₂₀ and C₂₂ with polyunsaturations) of herring oil or sardine oil. Preferably use is made of linseed oil fatty acid and/or soybean oil fatty acid. Preferred fatty acids are poly unsaturated.

According to a preferred embodiment of the invention the wood preserver is the reaction product of maleic anhydride and soybean oil fatty acid.

According to a further preferred embodiment of the invention the anhydride functional resin is an anhydride functional alkyd resin. Alkyd resins are described for example in Encyclopaedia of Polymer Science and Engineering I: 644-679 (1985), and what is disclosed there is included herein by reference. Alkyd resins are prepared from polyalcohols, polycarboxylic acids and oils and/or fatty acids, the fatty acid chains being saturated, unsaturated, and if desired partly polyunsaturated.

As polycarboxylic acid use is made for example of phthalic acid, isophthalic acid, terephthalic acid, maleic acid, fumaric acid, itaconic acid, succinic acid, adipic acid, sebacic acid, azelaic acid, trimellitic acid, pyromellitic acid, tetrahydrophthalic acid, endomethylene-tetrahydrophthalic acid, cyclohexanecarboxylic acid and the corresponding acid anhydrides, for example phthalic acid anhydride, maleic acid anhydride, trimellitic acid anhydride, pyromellitic acid anhydride, tetrahydrophthalic acid anhydride and/or endomethylene-tetrahydrophthalic acid anhydride. It is not unusual to use other monocarboxylic acids besides the fatty acids, for example benzoic acid and para-t-butylbenzoic acid. If desired the acid can also be applied as its ester with a C1-C4-alcohol. When the acid is used as its ester it is preferred to use its methyl ester.

As polyalcohol generally use is made of pentaerythritol, glycerol, trimethylol propane, glycol, 1,3-propanediol, 1,4-butanediol, 1,6-hexanediol, di(ethylene glycol), tri(ethylene glycol), di(propylene glycol), 1,2-propanediol, 1,2-butanediol, 1,3-butanediol, neopentyl glycol, poly(ethylene glycol), poly(propylene glycol), bisphenol-A ethoxylated with 2-12 units ethylene oxide and/or bisphenol-A propoxylated with 2-12 units propylene oxide.

Poly(alkylene glycols) can also be used as polyalcohol to contribute to emulsion stabilization.

As fatty acids or oils thereof use is preferably made of vegetable or animal fatty acids or oils. Very suitable are for example linseed oil, tall oil fatty acid, soybean oil, cotton seed oil, safflower oil, oiticica oil, caraway oil, rapeseed oil, coconut oil, dehydrated castor oil, wood oil, vernonia oil, sunflower oil and/or fish oil and the corresponding fatty acids.

The alkyd resin can further be modified in a way known in itself with for example (poly)acrylates, (poly)styrene, polyisocyanates so that urethane groups are obtained, silicone resins, phenol resins, colophony resins, epoxy esters and epoxy resins.

When impregnating wood with the aid of for example a brush a protective layer is applied with only a part of the wood, depending on the kind of wood that is used for example 50%, being penetrated. With wood preservation, by means of for example the vacuum-pressure process, virtually all free space in the wood can become filled with the wood preserver, upon which the hydroxyl groups of the wood can react with the anhydride of the wood preserver according to the invention. The vacuum-pressure method is known to the man skilled in the art. Reference can for example be made to the Dutch industry norm: NEN 2930 (January 1991). The requirements to be met by a wood preserver therefore differ from those to be met by an impregnating agent applied with a brush.

Besides the anhydride functional resin the wood preserving system can also contain small quantities of non-aqueous solvent to facilitate penetration into the wood. The choice of non-aqueous solvent is not particularly critical as long as the non-aqueous solvent dissolves the anhydride functional resin. It is preferred to use a non-aqueous solvent that evaporates easily. The non-aqueous solvent preferably has a low boiling point. It is more preferred to use ketones with a relatively short carbon-chain. It is preferred to have a carbon-chain of between 3 and 7 carbon atoms. It is even more preferred to use methyl-isobutyl-ketone (4-methyl-2-pentanone).

The use of an anhydride functional resin as a wood preserver is illustrated in the following, non-limiting examples.

### Example I: Preparation of an anhydride functional resin according to the present invention based on a fatty acid

818.7 g of soy bean oil fatty acid and 286.5 g of maleic anhydride were introduced into a glass reactor, which could be heated by an isomantle, fitted with a mechanical stirrer and a nitrogen connection. The reaction mixture was heated to ± 210°C. After 5 hours at 210°C the glass reactor was cooled to <100°C, the product filtered and pressed off. The anhydride functional resin has an anhydride value of 145-150 meq/g resin.

### Example II: Preparation of an anhydride functional resin according to the present invention based on an oil.

923.0 g of linseed oil and 104.0 g of maleic anhydride were introduced into a glass reactor, which could be heated by an isomantle, fitted with a mechanical stirrer and a nitrogen connection. The reaction mixture was heated to ± 210°C. After 5 hours at 210°C the glass reactor was cooled to <100°C, the product filtered and pressed off. The anhydride functional resin has an anhydride value of 55-60 meq/g resin.

### Experiment A: Comparison of wood treated with an anhydride functional resin according to the present invention and untreated wood.

In the following experiment the anhydride functional resins that were prepared in Example I and II, were applied either as such (undiluted) or as a solution in methyl-isobutyl-ketone. Wood samples were treated with the four products:
Ia: anhydride functional resin according to Example I, undiluted,
Ib: anhydride functional resin according to Example I, in methyl-isobutyl-ketone,
IIa: anhydride functional resin according to Example II, undiluted,
IIb: anhydride functional resin according to Example II, in methyl-isobutyl-ketone.

All wood samples showed significant improvement after being treated with the anhydride functional resin according to the present invention, in comparison with untreated wood. Concerning dimensional stability the improvement was 40 to 80%, durability (NEN-EN252) up to class 1, bending strength (DIN 52 186) showed an improvement up to 20% and stiffness (DIN 52 186) up to 20% improvement.

The mentioned dimensional stability was determined relative to an untreated wood sample, by determining the volumetric Anti Shrink / Swelling Efficiency (ASE), by the following, briefly described, procedure.

The dimensions of the wood samples should be between 20*20*5 and 40*40*10 mm, sawed both in radial and tangential direction. Firstly the equilibrium moisture content of the wood is determined. The samples are dried, followed by stepwise moisture absorption by conditioning the samples in separate cupboards with each time an increasing moisture content, which makes the test samples swell. Thereafter the samples are desorbed again, by placing them in cupboards with a decreasing moisture content, which makes the test samples shrink. The samples are weighed at certain times. When the samples have arrived at a constant weight, that is regarded as the equilibrium weight for the particulate climate. The dimensions of the test samples are noted before putting the samples in the next cupboard and repeating the same steps. The amount of swelling or shrinking measured can be expressed in a swelling or shrinking coefficient, which is a measure for the volumetric Anti Shrink / Swelling Efficiency (ASE) of the samples relative to an untreated wood sample.

## Claims

1. Use of an anhydride functional resin with an anhydride functionality between 50 and 200 meq/g resin as a wood preserver.

2. Use according to claim 1, **characterized in that** the resin is an oxidatively drying resin.

3. Use according to one of claims 1-2, **characterized in that** the resin is the reaction product of an unsaturated anhydride and a fatty acid or an oil.

4. Use according to claim 3, **characterized in that** the anhydride is maleic anhydride.

5. Use according to claim 3, **characterized in that** the oil is linseed oil, soybean oil, safflower oil, oiticica oil, caraway oil, rapeseed oil, castor oil, dehydrated castor oil, cotton seed oil, wood oil, vernonia oil, sunflower oil, groundnut oil, olive oil, soybean leaf oil, corn oil, fish oil such as for example herring oil or sardine oil and/or non-cyclic terpene oil.

6. Use according to claim 5, **characterized in that** the oil is sunflower oil or soybean oil.

7. Use according to claim 3, **characterized in that** the fatty acid is linseed oil fatty acid, tall oil fatty acid, soybean oil fatty acid, cotton seed oil, safflower oil, oiticica oil fatty acid, caraway oil fatty acid, rapeseed oil fatty acid, coconut oil fatty acid, dehydrated castor oil fatty acid, wood oil fatty acid, vernonia oil fatty acid, sunflower oil fatty acid, fish oil fatty acid, lauroleic acid, myristoleic acid, palmitoleic acid, oleic acid, linoleic acid, linolenic acid, ricinoleic acid, gadoleic acid, erucic acid and/or an unsaturated fatty acid of herring oil or sardine oil.

8. Use according to claim 7, **characterized in that** the fatty acid is linseed oil fatty acid and/or soybean oil fatty acid.

9. Use according to one of claims 1-8, **characterized in that** the anhydride functional resin is the reaction product of maleic anhydride and soy bean fatty acid.

10. Use according to either one of claims 1-2, **characterized in that** the resin is an alkyd resin.
